**Europäisches Patentamt**

**European Patent Office**

**Office européen des brevets**

(19)

(11) Veröffentlichungsnummer: **0 040 777**
**A1**

(12) # EUROPÄISCHE PATENTANMELDUNG

(21) Anmeldenummer: **81103772.0**

(22) Anmeldetag: **16.05.81**

(51) Int. Cl.³: **A 23 L 1/31,** A 22 C 11/00

(30) Priorität: **24.05.80 DE 3019942**

(43) Veröffentlichungstag der Anmeldung: **02.12.81**
**Patentblatt 81/48**

(84) Benannte Vertragsstaaten: **AT BE CH FR GB IT LI LU NL SE**

(71) Anmelder: **Jürgens, Heino, Jr., Eupener Strasse 20, D-2900 Oldenburg (DE)**

(72) Erfinder: **Jürgens, Heino, Jr., Eupener Strasse 20, D-2900 Oldenburg (DE)**

(74) Vertreter: **Jabbusch, Wolfgang, Dr., Elisabethstrasse 6, D-2900 Oldenburg (DE)**

(54) **Verfahren zur Verbesserung der Geniessbarkeit gewürzbeschichteter Würste, insbesondere Pfeffersalami, und Vorrichtung zur Durchführung des Verfahrens.**

(57) Verfahren zur Verbesserung der Genießbarkeit gewürzbeschichteter Würste, insbesondere Pfeffersalami, bei dem die Wurstmasse in eine kalibrierte Naturdarmhülle gepreßt und die Hülle anschließend mit einem Haftmittel und danach mit Gewürz, insbesondere Pfeffer, beschichtet wird, sowie eine Vorrichtung zur Durchführung des Verfahrens.

Erfindungsgemäß wird die Naturdarmhülle vor dem Auftragen des Haftmittels für das Gewürz in schmale, vorzugsweise 1 mm breite, im wesentlichen in Wurstlängsrichtung verlaufende Streifen zertrennt, indem die Wurst durch eine Zertrenneinrichtung gezogen wird.

Die Vorrichtung zur Durchführung des Verfahrens zeichnet sich dadurch aus, daß ein Durchbruch der Zertrenneinrichtung, durch die die Wurst gezogen wird, eine Vielzahl von nach innen radial vorstehenden Schneidklingen (8) aufweist.

0040777

Herr Heino Jürgens jr., Eupener Str. 20, 2900 Oldenburg


Verfahren zur Verbesserung der Genießbarkeit gewürzbe -
schichteter Würste, insbesondere Pfeffersalami, und Vorrichtung zur Durchführung des Verfahrens

Die Erfindung betrifft ein Verfahren zur Verbesserung der
Genießbarkeit gewürzbeschichteter Würste, insbesondere
Pfeffersalami, bei dem die Wurstmasse in eine kalibrierte
Hülle gepreßt und die Hülle anschließend mit einem Haftmittel und danach mit Gewürz, insbesondere Pfeffer, be -
schichtet wird; sowie eine Vorrichtung zur Durchführung
des Verfahrens.

Pfeffersalami ist eine Wurst im Kunstdarm, der außen mit
gemahlenem Pfeffer bestreut ist. Der Kunstdarm ist ungenießbar und muß von jeder Wurstscheibe vor dem Verzehr
entfernt werden. Damit ist dann aber auch die Wurstscheibe ohne Pfeffer.

Der Kunstdarm ist auch schon durch einen Naturdarm er -
setzt worden, da solche Därme verdaulich sind und in einer
durch moderne Herstellungsverfahren möglichen sogenannten
Kaliberform in mit gewissen Toleranzen gleichen Durchmessern angeboten werden. Bei Durchmessern von 60 bis 90 mm,
wie sie für zum Beispiel Pfeffersalami üblich sind, sind
die Naturdärme jedoch verhältnismäßig dickwandig und kommen somit auch nicht für den Verzehr in Frage, da sie nur
schwer zerkaut werden können. Ebenso wie bei Kunstdärmen,
muß deshalb von jeder Wurstscheibe vor dem Verzehr der umgebende Ring des Naturdarms zusammen mit dem Pfeffer entfernt werden.

Der Erfindung liegt die Aufgabe zugrunde, eine unter Verwendung von Naturdärmen hergestellte Pfeffersalami so zu verbessern, daß ein Verzehr ohne vorherige Entfernung des Naturdarms und somit auch des daran haftenden Pfeffers möglich ist.

Diese Aufgabe ist erfindungsgemäß dadurch gelöst worden, daß die Naturdarmhülle vor dem Auftragen des Haftmittels in schmale, vorzugsweise 1 mm breite, im wesentlichen in Wurstlängsrichtung verlaufende Streifen zertrennt wird.

Diese Maßnahme hat den Vorteil, daß von einer derart vorbehandelten Wurst abgeschnittene dünne Scheiben zusammen mit den am Rand der Wurstscheibe verbleibenden lediglich nur noch sehr gering dimensionierten Stückchen der Naturdarmhülle und deshalb auch mit daran anhaftendem Pfeffer ohne weiteres verzehrt werden können. Der gleichmäßig in sehr schmale Streifen zertrennte Naturdarm, der die bereits ausgereifte Wurstmasse umgibt, kann ohne weiteres anschließend mit dem Haftmittel und mit Pfeffer bestreut werden, so daß die Längsstreifen dann bei der fertiggestellten Wurst äußerlich nicht mehr zu sehen sind.

Für ein Zertrennen in schmale Streifen ist neben der allerdings vorzuziehenden vollständigen Zertrennung, zum Beispiel durch Schnitte, auch eine Perforation denkbar. Selbstverständlich fallen auch andere Zertrennungsformen der Naturdarmhülle unter den Erfindungsgedanken, mit denen gewährleistet ist, daß an einer von der Wurst abgeschnittenen Scheibe der Naturdarm lediglich noch in kleinen Stückchen anhaftet.

Vorzugsweise wird die Wurst zur Herstellung der Zertrennung durch eine Zertrenneinrichtung gezogen. Dieser Verfahrensschritt läßt sich verhältnismäßig einfach in vorhandene Fabrikationsanlagen zur Herstellung von mit Gewürzen beschichteten Würsten, insbesondere Pfeffersalami, einreihen, bei denen die Würste, an Spießen hängend, durch die einzelnen Bearbeitungsstationen geführt werden.

In Lösung der gestellten Aufgabe ist zur Durchführung des Verfahrens auch eine Vorrichtung geschaffen worden, die dadurch gekennzeichnet ist, daß ein Tragelement einen Durchbruch zur Durchführung der Wurst aufweist, der mit an seinem Umfang gleichmäßig verteilt angeordneten, nach innen vorstehenden Schneidklingen versehen ist. Je dichter die Klingen innerhalb des Durchbruchs nebeneinander angeordnet sind, desto schmaler werden die Streifen, in welche die Naturdarmhülle zerlegt wird, sobald die Wurst in einem sehr einfachen Arbeitsschritt durch den Durchbruch mit den Schneidklingen gezogen wird.

Nach einer Weiterbildung zeichnet sich die Vorrichtung dadurch aus, daß jede Schneidklinge im Durchbruch um eine quer zur Schneide verlaufende Achse schwenkbar gelagert ist.

Diese Maßnahme hat den Vorteil, daß die Schneidklingen durch eine Schwenkbewegung um ihre Achsen in Bezug auf die gewünschte Schnittiefe eingestellt werden können, indem sie zum Beispiel weiter in den Durchbruch vorstehen, sobald sie um einen größeren Winkel um die Achsen geschwenkt werden. Unterschiede in den Wurstdurchmessern und den Stärken der verwendeten Naturdärme können dadurch sehr einfach ausgeglichen werden.

Das Tragelement für die Zertrennvorrichtung ist vorzugs - weise eine Platte mit mehreren Durchbrüchen, wobei in jeden Durchbruch ein Ring einsetzbar ist, an dem die Schneidklingen gelagert sind. Dadurch können mehrere Würste gleichzeitig durch die Durchbrüche gezogen werden, um an jeder Wurst die gewünschte Zertrennung der Naturdarmhülle in schmale Längsstreifen durchzuführen. Die Vorrichtung arbeitet dadurch wirtschaftlicher und kann zum Beispiel ohne weiteres durch Veränderung der Anzahl von Durchbrüchen in einer Platte auch an jede bereits vorhandene Fabrikationsanlage mit unterschiedlichen Kapazitäten nachträglich angepaßt werden.

Bei einer bevorzugten Ausführung der Vorrichtung ist vorgesehen, daß jeder Ring aus zwei koaxial zueinander angeordneten, entlang ihrer gemeinsamen Achse gegeneinander verschiebbaren Teilen besteht, wobei die Schneidklingen von einem der beiden Teile des Rings mitnehmbar und dabei um die im jeweils anderen Teil des Rings angeordnete Achse schwenkbar sind.

Beide Teile der Ringe können zum Beispiel in eine solche Ausgangsstellung gebracht werden, daß die in dem als Messerkranz ausgebildeten einen Teil des Rings vorhandenen Schneidklingen vollständig zurückgezogen sind, so daß eine an einem Spieß hängende Wurst von oben durch den Messerkranz herabgelassen werden kann, sobald der Spieß entsprechend abgesenkt wird. Erfolgt danach eine Verschiebebewegung des anderen Teils des Rings, werden die Schneidklingen mitgeführt und dabei um ihre Achsen geschwenkt. Demzufolge treten die Schneidklingen aus dem Messerkranz aus und stehen nunmehr in die Öffnung vor, durch welche die an dem Spieß hängende Wurst bei Anheben des Spießes wieder nach oben gezogen wird. Dabei zerschneiden die vorstehenden Schneidklingen den Naturdarm der hochgezogenen Wurst in die schmalen Streifen.

Konstruktiv sind deshalb die beiden Teile der Ringe so ausgebildet, daß das innere Teil des Rings Schlitze zur Aufnahme je einer darin gelagerten Schneidklinge aufweist, die mit einem der Messerklingenspitze abgekehrten Abschnitt in eine zugeordnete Mitführungsaufnahme des äußeren Teils des Rings hineinragt.

Bei einer einfach gestalteten und deshalb kostengünstig herstellbaren Ausführungsform der Vorrichtung ist vorgesehen, daß das äußere Teil jedes Ringes in eine parallel zu der Platte angeordnete zweite Platte einsetzbar ist und daß beide Platten mittels eines Betätigungselements von einer Ausgangsstellung aus gegeneinander bewegbar sind. Die Bewegung der Platten, gegeneinander oder voneinander, bewirkt somit ein Ausschwenken oder Einschwenken der Schneidklingen, wobei die einfache geradlinige Hubbewegung der Platten den Vorteil hat, daß ein einfaches Betätigungselement verwendet werden kann. Vorzugsweise ist das Betätigungselement ein Arbeitszylinder.

Da durch die Hubbewegung der einen Platte der beiden Platten die mit dem entsprechenden Teil des Rings in der feststehenden Platte angeordneten Schneidklingen bezüglich ihrer radialen Vorstehung in den Raum des Rings, durch den die Wurst hindurch gezogen wird, beeinflußbar sind, kann auf einfachste Weise ein Einstellen der Schnittiefe der Schneidklingen erreicht werden, indem eine der beiden Platten als Hubbegrenzung einen einstellbaren Anschlag für die jeweils andere Platte aufweist.

Vorzugsweise ist als Anschlag eine Justierschraube vorgesehen, mit der eingestellt werden kann, wie weit die beiden Platten durch den Arbeitszylinder gegeneinander bewegt werden können.

Ein Ausführungsbeispiel der Erfindung, aus dem sich weitere erfinderische Merkmale ergeben, ist in der Zeichnung dargestellt. Es zeigen:

Fig. 1 einen Schnitt durch die Seitenansicht der erfin - dungsgemäßen Vorrichtung,

Fig. 2 eine Draufsicht auf die Vorrichtung gemäß Fig. 1 und

Fig. 3 die Draufsicht auf einen mit Schneidklingen be - stückten Ring als Einzelteil der Vorrichtung gemäß Fig. 1 und Fig. 2.

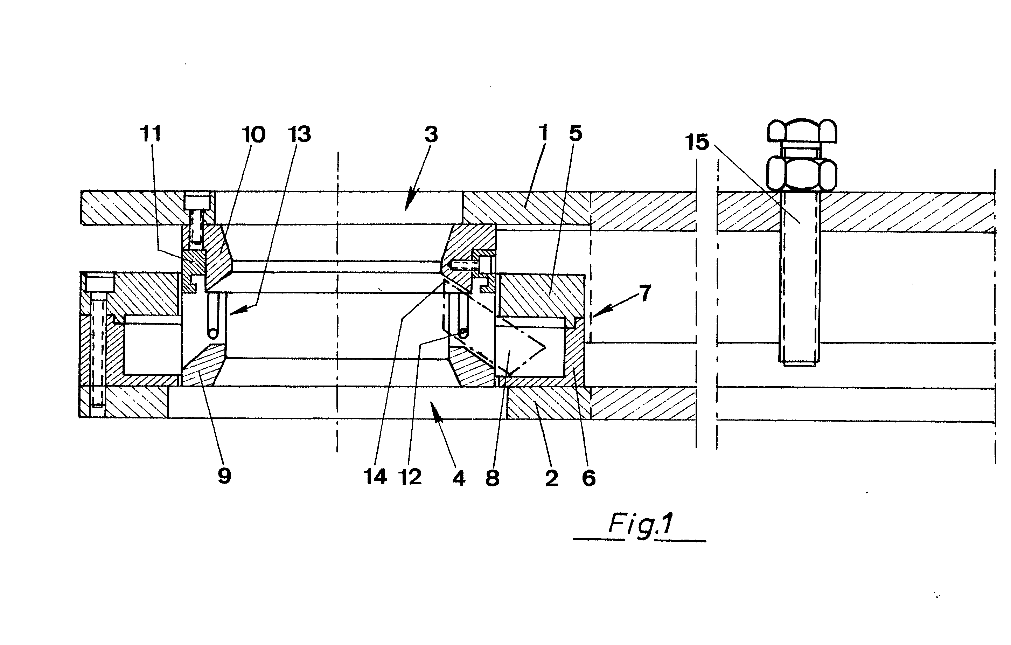

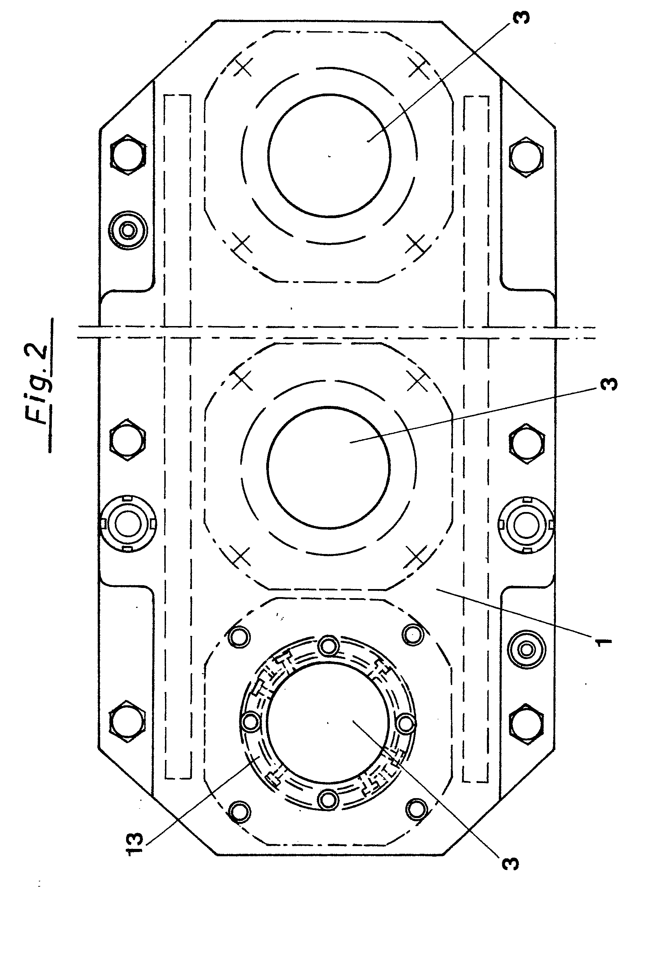

In Fig. 1 ist ein Schnitt durch die Seitenansicht der Vorrichtung zur Durchführung des erfindungsgemäßen Verfahrens dargestellt. Die Vorrichtung besteht im wesentlichen aus zwei parallelen Platten 1 und 2, von denen jede mit kreisförmigen Durchbrüchen 3 und 4 versehen ist. Die Durchbrü - che sind in Längsrichtung der Platten nebeneinander ange - ordnet, wie es aus Fig 2 ersichtlich ist.

Die beiden Platten 1 und 2 sind in geeigneten Traggestellen, die nicht weiter dargestellt sind, so übereinander gehal - ten, daß die Durchbrüche 3 und 4 fluchtend übereinander stehen. Ein aus zwei Flanschen 5 und 6 zusammengesetztes kreisförmiges Teil 7 ist an der Innenseite der Platte 2 derart befestigt, daß das Teil 7 den Durchbruch 4 umgibt. Der Querschnitt des Teils 7 ist im wesentlichen U-förmig, wobei der zwischen den U-Schenkeln ausgebildete freie Raum einen Führungsspalt für Schneidklingen 8 darstellt, die in einem ebenfalls aus mehreren Flanschen 9, 10 und 11 zusammengesetzten kreisförmigen Teil 13 im Gelenkpunkt 12 schwenkbar gelagert sind, wobei das aus den Flanschen 9, 10 und 11 gebildete Teil 13 jedoch an der Unterseite der Platte 1 befestigt ist, so daß es den Durchbruch 3 in der Platte 1 kreisförmig umgibt.

Die Teile 7 und 13 bilden demzufolge zusammen einen mit Schneidklingen 8 bestückten Ring, welcher derart zu den Durchbrüchen in den Platten angeordnet ist, daß die Schneidklingen 8 bei Schwenkung um den Lagerpunkt 12 mit ihren Spitzen 14 nach innen vorstehen.

Bei der dargestellten Ausführung befinden sich die Schneidklingen in zurückgezogener Position, so daß eine zu bearbeitende Wurst hängend von oben in die Durchbrüche 3 und 4 durch die Platten eingeführt werden kann, ohne von den Schneidklingen behindert zu werden. Werden die Platten 1 und 2 gegeneinanderbewegt, so daß sich der Abstand zwischen ihnen verringert, verschieben sich die kreisförmigen Teile 7 und 13 des Rings ebenfalls gegeneinander, so daß jede Schneidklinge um ihren Lagerpunkt 12 schwenkt, bis ihre Spitze in eine nunmehr vorstehende Position kommt. Die danach durch die Durchbrüche 3 und 4 wieder hochgezogene Wurst wird dabei an der Oberfläche eingeschnitten.

Die Platten 1 und 2 werden durch einen nicht dargestellten Arbeitszylinder gegeneinanderbewegt, wobei der Hub begrenzt wird durch die in die Platte 1 eingelassene Justierschraube 15.

In Fig. 2 ist eine Draufsicht auf die Vorrichtung gemäß Fig. 1 dargestellt. Es ist deutlich, daß die Platten 1 und 2 mit mehreren nebeneinander angeordneten Durchbrüchen versehen sind, die von den mit Schneidklingen bestückten Ringen umgeben sind, welche aus den Teilen 13 und 7 gebildet werden.

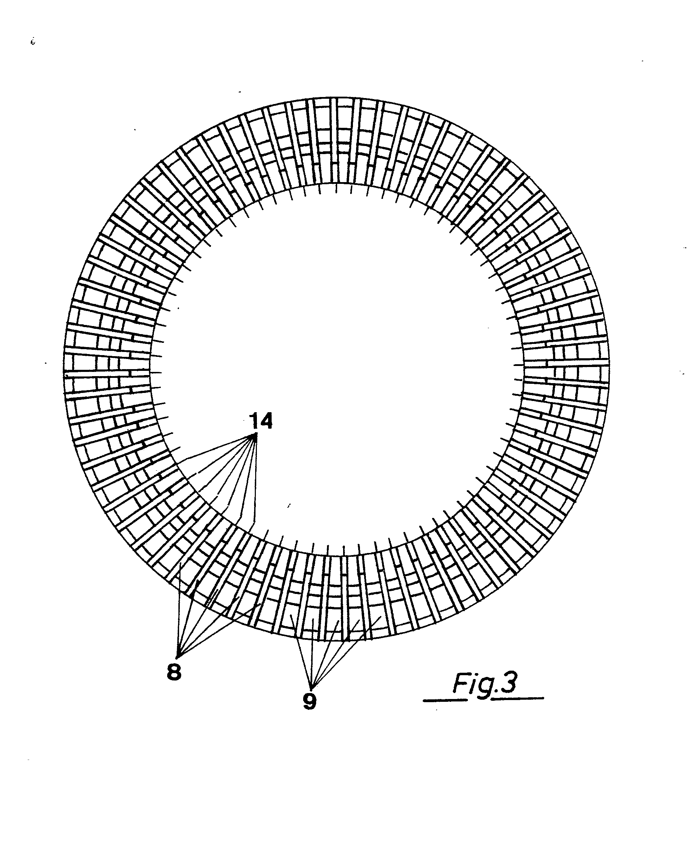

In Fig. 3 ist der mit Schneidklingen bestückte Flansch 9 des inneren Teils 13 eines Rings in der Draufsicht als Ein-

0040777

zelheit dargestellt. Die radiale Anordnung der Schneidklingen 8, die mit ihren Spitzen 14 leicht in den vom kreisförmigen Flansch umschlossenen Raum vorstehen ist deutlich.

Sobald eine Wurst durch diesen Messerkranz gezogen wird, erfolgt ein Zerschneiden der Wursthülle in schmale parallele Streifen.

0040777

Patentansprüche:

1. Verfahren zur Verbesserung der Genießbarkeit gewürzbe -
schichteter Würste, insbesondere Pfeffersalami, bei dem
die Wurstmasse in eine kalibrierte Naturdarmhülle gepreßt
und die Hülle anschließend mit einem Haftmittel und danach
mit Gewürz, insbesondere Pfeffer, beschichtet wird,
dadurch gekennzeichnet,
daß die Naturdarmhülle vor dem Auftragen des Haftmittels
in schmale, vorzugsweise 1 mm breite, im wesentlichen in
Wurstlängsrichtung verlaufende Streifen zertrennt wird.

2. Verfahren nach Anspruch 1, dadurch gekennzeichnet, daß die
Wurst durch eine Zertrenneinrichtung gezogen wird.

3. Vorrichtung zur Durchführung des Verfahrens nach Anspruch
1 oder 2, dadurch gekennzeichnet, daß ein Tragelement einen Durchbruch zur Durchführung der Wurst aufweist, der mit
an seinem Umfang gleichmäßig verteilt angeordneten, nach
innen radial vorstehenden Schneidklingen (8) versehen ist.

4. Vorrichtung nach Anspruch 3, dadurch gekennzeichnet, daß
jede Schneidklinge (8) um eine quer zur Schneide verlaufende Achse (12) schwenkbar gelagert ist.

5. Vorrichtung nach einem der Ansprüche 3 oder 4, dadurch gekennzeichnet, daß das Tragelement eine Platte (1) mit mehreren Durchbrüchen (3) ist und daß in jeden Durchbruch ein
mit Schneidklingen (8) bestückter Ring einsetzbar ist.

6. Vorrichtung nach Anspruch 5, dadurch gekennzeichnet, daß
jeder Ring aus zwei koaxial zueinander angeordneten, entlang ihrer gemeinsamen Achse gegeneinander verschiebbaren
Teilen (7, 13) besteht, wobei die Schneidklingen (8) von einem äußeren der beiden Teile (7) des Rings mitnehmbar und um die im jeweils inneren Teil (13) des Rings angeordneten Achsen (12) schwenkbar sind.

7. Vorrichtung nach Anspruch 6, dadurch gekennzeichnet, daß das innere Teil eines Rings (13) Schlitze zur Aufnahme je einer darin gelagerten Schneidklinge (8) aufweist, die mit einem der Schneidklingen-Spitze (14) abgekehrten Abschnitt in eine zugeordnete Mitführungsaufnahme des äußeren Teils (7) des Rings hineinragt.

8. Vorrichtung nach einem der Ansprüche 3 bis 7, dadurch gekennzeichnet, daß das äußere Teil (7) jedes Rings in eine parallel zu der Platte (1) angeordnete zweite Platte (2) einsetzbar ist und daß beide Platten mittels eines Betätigungselements von einer Ausgangsstellung aus gegeneinander bewegbar und wieder in die Ausgangsstellung zurückführbar sind.

9. Vorrichtung nach Anspruch 8, dadurch gekennzeichnet, daß als Betätigungselement ein Arbeitszylinder vorgesehen ist.

10. Vorrichtung nach Anspruch 8, dadurch gekennzeichnet, daß eine der beiden Platten (1,2) als Hubbegrenzung einen einstellbaren Anschlag für die jeweils andere Platte aufweist.

11. Vorrichtung nach Anspruch 10, dadurch gekennzeichnet, daß der Anschlag eine Justierschraube (15) ist.

_Fig.1_

004077 8029

Fig.2

0040777

Fig.3

| | Europäisches Patentamt | EUROPÄISCHER RECHERCHENBERICHT | 0040777 Nummer der Anmeldung EP 81 10 3772 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 206 256 (JUSTICE) <br> * Seite 2, rechte Spalte, Zeilen 16-39; Ansprüche * | 1 |
| | -- | |
| | US - A - 3 095 603 (MAY) <br> * Spalte 2, Zeilen 1-49 * | 2-4 |
| | -- | |
| | US - A - 4 098 179 (FLEISHAKER) <br> * Spalte 1, Zeilen 28-32; Anspruch 1 * | 1 |
| | -- | |
| A | US - A - 3 329 511 (SHEWEY) <br> * Spalte 1, Zeile 60 - Spalte 2, Zeile 68 * | 1 |
| | -- | |
| A | US - A - 3 743 511 (STEFANEC) <br> * Anspruch 1 * | 1 |
| | --- | |

**KLASSIFIKATION DER ANMELDUNG (Int. Cl.³)**

A 23 L 1/31
A 22 C 11/00

**RECHERCHIERTE SACHGEBIETE (Int. Cl.³)**

A 23 L
A 22 C

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-09-1981 | DE LAMEILLEURE |

EPA form 1503.1   06.78